# EUROPÄISCHE PATENTSCHRIFT

(11) **EP 3 599 059 B1**
(45) Veröffentlichungstag und Bekanntmachung des Hinweises auf die Patenterteilung: **04.05.2022**
(21) Anmeldenummer: 18185518.0
(22) Anmeldetag: 25.07.2018
(51) Int. Cl.: B25F 5/00

(54) **HANDGEFÜHRTES ARBEITSGERÄT UND VERFAHREN ZUR MONTAGE EINES ANTIVIBRATIONSELEMENTS EINES HANDGEFÜHRTEN ARBEITSGERÄTS**
HAND-HELD WORKING DEVICE AND METHOD FOR MOUNTING AN ANTIVIBRATION ELEMENT OF A HAND-HELD WORKING DEVICE
OUTIL DE TRAVAIL À MAIN ET PROCÉDÉ DE MONTAGE D'UN ÉLÉMENT ANTI-VIBRATOIRE D'UN OUTIL DE TRAVAIL À MAIN

(43) Veröffentlichungstag der Anmeldung: 29.01.2020
(73) Patentinhaber: Andreas Stihl AG & Co. KG, 71336 Waiblingen (DE)
(72) Erfinder: Freymüller, Carsten, 71384 Weinstadt (DE)
(74) Vertreter: Reinhardt, Annette

(56) Entgegenhaltungen:
- EP-A2- 2 436 263
- JP-A- 2002 038 977
- JP-A- 2006 042 724
- JP-A- 2011 177 798
- US-A1- 2004 016 133

## Beschreibung

Die Erfindung betrifft ein handgeführtes Arbeitsgerät der im Oberbegriff des Anspruchs 1 angegebenen Gattung sowie ein Verfahren zur Montage eines Antivibrationselements eines handgeführten Arbeitsgeräts.

Aus der JP 2006-042724 A ist ein handgeführtes Arbeitsgerät, nämlich eine Heckenschere bekannt, das einen Antriebsmotor und eine Griffeinheit aufweist. Der Antriebsmotor ist über Antivibrationselemente von der Griffeinheit schwingungsentkoppelt. Die Antivibrationselemente weisen Schraubenfedern auf, die jeweils über eine Schraube an der Motoreinheit fixiert sind. Das andere Ende der Schraubenfeder ist in einen mit der Griffbaugruppe verbundenen Stutzen eingeschraubt. Die Befestigungsschraube zur Fixierung der Schraubenfeder an der Motorbaugruppe ist durch eine Öffnung zugänglich. Durch diese Öffnung kann die Schraube zur Montage auch in die Schraubenfeder geschoben werden.

Die EP 2 436 263 A2 zeigt ein gattungsgemäßes Arbeitsgerät gemäß dem Oberbegriff des Anspruchs 1. Zur Montage des Antivibrationselements ist vorgesehen, dass ein erstes Ende der Schraubenfeder mit einer Befestigungsschraube an einer ersten Baugruppe fixiert, dann in ein zweites Ende der Schraubenfeder ein Stopfen eingeschraubt und anschließend der Stopfen an der zweiten Baugruppe fixiert wird.

Die JP 2011-177798 A zeigt ein Arbeitsgerät mit einem Antivibrationselement, dessen Schraubenfeder ebenfalls zuerst mit einem ersten Ende über eine erste Befestigungsschraube an einer ersten Baugruppe fixiert, anschließend ein Stopfen in das zweite Ende der Schraubenfeder eingeschraubt und dann der Stopfen über eine in den Stopfen eingebettete zweite Befestigungsschraube und eine auf die zweite Befestigungsschraube aufgeschraubte Mutter fixiert wird.

Der Erfindung liegt die Aufgabe zugrunde, ein handgeführtes Arbeitsgerät der gattungsgemäßen Art zu schaffen, das bei einfachem Aufbau eine einfache Montage ermöglicht. Eine weitere Aufgabe der Erfindung besteht darin, ein Verfahren zur Montage eines Antivibrationselements eines handgeführten Arbeitsgeräts anzugeben.

Diese Aufgabe wird durch ein handgeführtes Arbeitsgerät mit den Merkmalen des Anspruchs 1 gelöst. Bezüglich des Verfahrens wird die Aufgabe durch ein Verfahren zur Montage eines Antivibrationselements mit den Merkmalen des Anspruchs 12 gelöst.

Der Kopf der Befestigungsschraube der Schraubenfeder weist eine Eingriffskontur für ein Werkzeug auf. Die Eingriffskontur ist durch eine Öffnung in einem Stutzen der zweiten Baugruppe zugänglich. Es ist vorgesehen, dass der Innendurchmesser der Öffnung kleiner als der Außendurchmesser des Kopfs der Befestigungsschraube ist. Dadurch kann die Befestigungsschraube nicht mehr aus dem Inneren der Schraubenfeder fallen, sobald das zweite Ende der Schraubenfeder an dem Stutzen angeschraubt ist. Vor der Montage der Schraubenfeder an dem Stutzen kann die Befestigungsschraube im Inneren der Schraubenfeder angeordnet und positioniert werden. Nach dem Anschrauben an dem Stutzen ist die Befestigungsschraube dann bereits vorpositioniert und muss lediglich noch an der ersten Baugruppe fixiert werden. Dadurch ist die Montage des Antivibrationselements des Arbeitsgeräts vereinfacht. Für die Montage des Antivibrationselements werden vorteilhaft lediglich zwei Schraubvorgänge, nämlich das Anschrauben des zweiten Endes der Schraubenfeder an dem Stutzen und das Einschrauben der Befestigungsschraube an der ersten Baugruppe, benötigt. Weitere Schraubvorgänge sind nicht notwendig.

Dadurch, dass die Befestigungsschraube über die Schraubenfeder selbst an der zweiten Baugruppe gehalten ist, sobald das zweite Ende der Schraubenfeder an einem Stutzen der zweiten Baugruppe angeschraubt ist, ist ein Verlieren der Befestigungsschraube während der Montage oder bei unbeabsichtigtem Lösen der Befestigungsschraube vermieden. Daher kann die Befestigungsschraube mit der Schraubenfeder an der zweiten Baugruppe vormontiert und erst zu einem späteren Zeitpunkt an der ersten Baugruppe fixiert werden. Zwischen der Fixierung des ersten Endes der Schraubenfeder und des zweiten Endes der Schraubenfeder können weitere Montageschritte zur Montage des Arbeitsgerätes liegen, während denen die zweite Baugruppe beliebig positioniert und gedreht werden kann, ohne dass die Befestigungsschraube aus der Schraubenfeder herausfallen kann. Dadurch ist die Montage des Arbeitsgeräts deutlich vereinfacht und kann flexibler ausgeführt werden.

Der Ausdruck "Eingriffskontur" bezeichnet vorliegend den Bereich der Befestigungsschraube, an dem ein Werkzeug und die Schraube miteinander in Eingriff sind. Die Befestigungskontur ist bevorzugt ein Innensechskant, ein Schlitz, ein Kreuzschlitz oder ein Torx. Die Eingriffskontur kann jedoch auch anders ausgebildet sein und beispielsweise auch am Außenumfang des Kopfs der Befestigungsschraube vorgesehen sein.

Vorteilhaft umfasst die eine der beiden Baugruppen mindestens einen Handgriff, und die andere der beiden Baugruppen umfasst einen Antriebsmotor. Der Stutzen ist bevorzugt einstückig mit einem Gehäuseteil der zweiten Baugruppe ausgebildet. Der Begriff "Gehäuseteil" ist dabei weit zu verstehen und kann beispielsweise auch einen Rahmen oder dgl. bezeichnen. In alternativer, vorteilhafter Gestaltung kann der Stutzen auch einstückig mit einem Bauteil, insbesondere einem Gehäuseteil der ersten Baugruppe ausgebildet sein. Ein weiterer Montageschritt, mit dem der Stutzen an einem Gehäuseteil der ersten oder zweiten Baugruppe fixiert werden muss, kann dadurch entfallen. Das Gehäuseteil, mit dem der Stutzen einstückig ausgebildet ist, bildet insbesondere mindestens einen Handgriff. Bevorzugt ist das Gehäuseteil ein Griffgehäuse, das einen oder mehrere Handgriffe des Arbeitsgeräts bildet und an dem der Stutzen einstückig ausgebildet ist. Das Griffgehäuse kann insbesondere als Griffrahmen ausgebildet sein.

Vorteilhaft weist die erste Baugruppe eine Verdrehsicherung auf, die die Befestigungsöse der Schraubenfeder gegen ein Verdrehen um die Längsmittelachse der Schraubenfeder sichert. Dadurch ist sichergestellt, dass die Schraubenfeder sich beim Anziehen der Befestigungsschraube nicht gegenüber der zweiten Baugruppe dreht. Dadurch kann je nach Wicklungsrichtung der Feder ein teilweises Abschrauben von dem Stutzen oder ein Verspannen der Feder vermieden werden. Eine einfache Gestaltung der Verdrehsicherung wird erreicht, wenn die Befestigungsöse eine unrunde Außenkontur aufweist und die erste Baugruppe die Befestigungsöse an ihrer unrunden Außenkontur gegen ein Verdrehen um die Längsmittelachse der Schraubenfeder sichert. Besonders bevorzugt weist die Befestigungsöse einen Bereich auf, in dem sich der Abstand des Drahts der Schraubenfeder zur Längsmittelachse der Schraubenfeder in Richtung auf das Ende des Windungsdrahts vergrößert.

Vorteilhaft ist die Befestigungsöse zumindest teilweise in einer Vertiefung der ersten Baugruppe angeordnet. Dadurch ist die Positionierung der Befestigungsöse an der ersten Baugruppe bei der Montage erleichtert. Besonders bevorzugt bildet mindestens eine die Vertiefung begrenzende Wand eine Verdrehsicherung für die Befestigungsöse gegen Verdrehen um die Längsmittelachse der Schraubenfeder. Für die Ausbildung der Verdrehsicherung werden dadurch keine zusätzlichen Bauteile oder Elemente benötigt.

Bevorzugt bildet die Befestigungsöse eine ebene Auflagefläche zur Auflage an der Baugruppe. Besonders bevorzugt ist der Abschnitt des Windungsdrahts der Schraubenfeder, der die Befestigungsöse bildet, am Ende der Schraubenfeder in einer senkrecht zur Längsmittelachse verlaufenden Ebene gewickelt und bildet dadurch die ebene Auflagefläche. In alternativer Gestaltung kann die Schraubenfeder im Bereich der Befestigungsöse auch eben geschliffen sein.

Vorteilhaft ist der Innendurchmesser der Befestigungsöse kleiner als der Außendurchmesser des Kopfs der Befestigungsschraube. Dadurch kann die Befestigungsschraube nicht durch die Befestigungsöse hindurch aus dem Inneren der Schraubenfeder gelangen. In besonders bevorzugter Gestaltung ragt der Stutzen ins Innere der Schraubenfeder. Dadurch ergibt sich gegenüber einem am Außenumfang der Schraubenfeder angeordneten Stutzen ein verringerter Bauraumbedarf. In alternativer Gestaltung kann der Stutzen auch am Außenumfang der Schraubenfeder angeordnet sein, und die Schraubenfeder kann in ein Innengewinde des Stutzens eingeschraubt sein.

Der Stutzen besitzt eine im Inneren der Schraubenfeder angeordnete Stirnseite. Der Abstand zwischen der Befestigungsöse und der Stirnseite des Stutzens ist in unbelastetem Zustand des Arbeitsgeräts kleiner als die Länge der Befestigungsschraube. Dadurch ist das Ende der Befestigungsschraube in der Befestigungsöse gesichert, so dass die Lage der Befestigungsschraube vorgegeben ist. Dadurch ist die Montage vereinfacht. Der Abstand einer Auflagefläche der Befestigungsöse, die zur Anlage an der ersten Baugruppe vorgesehen ist, zur Stirnseite des Stutzens ist größer als die Länge der Befestigungsschraube. Dadurch liegt das freie Ende der Befestigungsschraube dann, wenn der Kopf an der Stirnseite des Stutzens anliegt, innerhalb der Befestigungsöse. Der Stutzen weist vorteilhaft einen Gewindeabschnitt auf, an dem die Schraubenfeder gehalten ist. Der Gewindeabschnitt weist insbesondere eine Nut auf, in die die Schraubenfeder eingeschraubt ist. Der Stutzen weist vorteilhaft einen Hülsenabschnitt auf, der in radialer Richtung einen Abstand zu der Schraubenfeder aufweist. An dem Hülsenabschnitt ist vorteilhaft die Stirnseite des Stutzens ausgebildet. Durch Anpassung der Länge des Hülsenabschnitts an die Länge der Befestigungsschraube kann sichergestellt werden, dass die Befestigungsschraube von der Stirnseite des Stutzens daran gehindert wird, bei gelöster Befestigungsschraube aus der Befestigungsöse zu rutschen. Die Anpassung der Länge des Hülsenabschnitts kann ohne Beeinflussung der Federeigenschaften der Schraubenfeder erfolgen.

Bevorzugt besitzt das Arbeitsgerät mindestens zwei Antivibrationselemente mit einer Schraubenfeder. Es ist vorgesehen, dass alle Stutzen der mindestens zwei Antivibrationselemente, an denen jeweils ein zweites Ende der Schraubenfedern eingeschraubt ist, an der zweiten Baugruppe angeordnet sind und alle Eingriffskonturen der Befestigungsschrauben von der gleichen Seite des Arbeitsgeräts aus zugänglich sind. Demnach sind alle Antivibrationselemente mit Schraubenfeder von der gleichen Seite des Arbeitsgeräts zu montieren. Insbesondere für das Festschrauben der Befestigungsschrauben ist dadurch keine Änderung der Lage des Arbeitsgeräts notwendig. Die Längsmittelachsen aller Schraubenfedern des Arbeitsgeräts liegen vorzugsweise näherungsweise parallel. Der Winkelabstand zwischen den Längsmittelachsen der Schraubenfedern aller Antivibrationselemente beträgt vorteilhaft weniger als 5°.

Ein Verfahren zur Montage eines Antivibrationselements eines handgeführten Arbeitsgeräts sieht vor, dass in einem ersten Schritt der Kopf der Befestigungsschraube in der Schraubenfeder angeordnet wird, dass in einem späteren, zweiten Schritt die Schraubenfeder mit ihrem zweiten Ende an dem Stutzen der zweiten Baugruppe eingeschraubt wird und dass in einem späteren, dritten Schritt die Befestigungsschraube in die erste Baugruppe eingeschraubt wird. Insbesondere zwischen dem zweiten Schritt und dem dritten Schritt können dabei weitere, von der Montage des Antivibrationselements unabhängige Montageschritte zur Montage des Arbeitsgeräts erfolgen. Der zweite Montageschritt folgt vorteilhaft unmittelbar auf den ersten Montageschritt, so dass die Befestigungsschraube unmittelbar nach der Anordnung in der Schraubenfeder durch das Anschrauben der Schraubenfeder an den Stutzen in der Schraubenfeder gesichert wird.

Ein Ausführungsbeispiel der Erfindung wird im Folgenden anhand der Zeichnung erläutert. Es zeigen:
- Fig. 1: eine schematische Darstellung eines handgeführten Arbeitsgeräts,
- Fig. 2: eine erste Baugruppe des Arbeitsgeräts aus Fig. 1 in schematischer Seitenansicht mit daran angeordneten Schraubenfedern von Antivibrationselementen,
- Fig. 3: eine zweite Baugruppe des Arbeitsgeräts mit daran angeordneten Antivibrationselementen,
- Fig. 4: einen Schnitt durch ein Antivibrationselement des Arbeitsgeräts aus Fig. 1,
- Fig. 5: einen Schnitt durch ein an der zweiten Baugruppe gehaltenes Antivibrationselement,
- Fig. 6: eine ausschnittsweise perspektivische Darstellung des Bereichs des ersten Endes des Antivibrationselements in Explosionsdarstellung,
- Fig. 7: eine Ansicht der Schraubenfeder am Zylinder der ersten Baugruppe,
- Fig. 8: einen Schnitt durch die Anordnung aus Fig. 7 im Bereich der Befestigungsöse,
- Fig. 9: eine Explosionsdarstellung des Antivibrationselements zwischen Zylinder und erster Baugruppe.

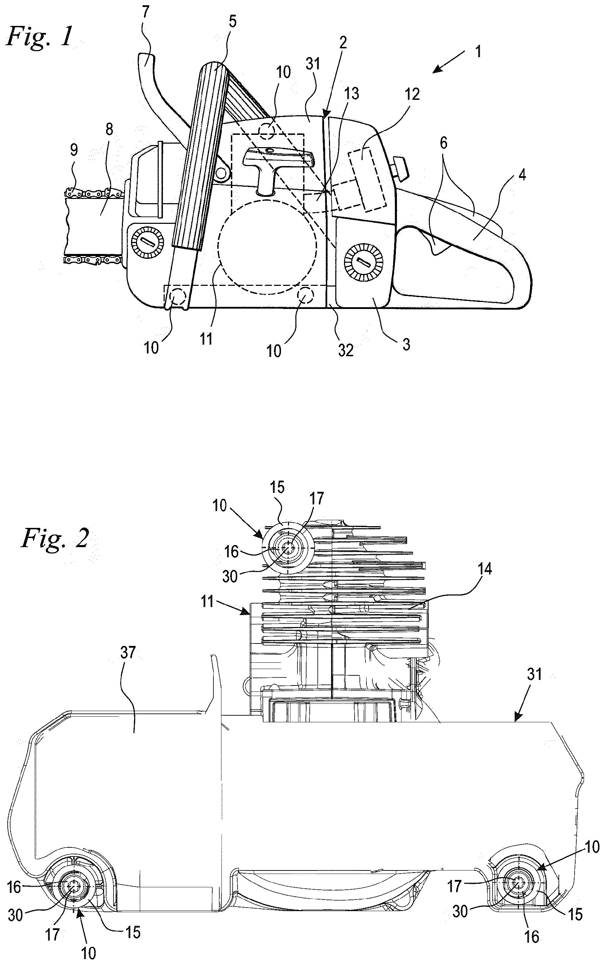

Fig. 1 zeigt schematisch ein handgeführtes Arbeitsgerät 1, im Ausführungsbeispiel eine Motorsäge. Das handgeführte Arbeitsgerät kann auch ein anderes Arbeitsgerät wie beispielsweise ein Trennschleifer, ein Freischneider, eine Heckenschere, ein Rasenmäher oder dergleichen sein. Das Arbeitsgerät 1 besitzt einen Antriebsmotor 11, der zum Antrieb eines Werkzeugs, nämlich einer Sägekette 9 dient. Die Sägekette 9 ist an einer Führungsschiene 8 umlaufend angeordnet. Zum Führen des Arbeitsgeräts 1 im Betrieb dienen Handgriffe 4 und 5. Der Handgriff 4 ist als hinterer Handgriff ausgebildet und besitzt Bedienelemente 6, beispielsweise einen Gashebel und eine Gashebelsperre. Der Handgriff 5 ist als Griffrohr ausgebildet. Das Arbeitsgerät 1 besitzt außerdem einen Handschutz 7, der sich zwischen dem Handgriff 5 und der Führungsschiene 9 erstreckt. Der Handschutz 7 kann zum Auslösen einer nicht gezeigten Bremseinrichtung für die Sägekette 9 dienen.

Eine erste Baugruppe 31 des Arbeitsgeräts 1 umfasst den Antriebsmotor 11 und das Werkzeug, das im Ausführungsbeispiel als Führungsschiene 8 mit der Sägekette 9 ausgebildet ist. Die Handgriffe 4 und 5 sind Teil einer zweiten Baugruppe 32 des Arbeitsgeräts. Die zweite Baugruppe 32 ist im Ausführungsbeispiel ein Griffgehäuse, an dem auch ein Betriebsmitteltank 3, insbesondere ein Kraftstofftank, integriert sein kann. Es kann auch vorgesehen sein, dass die erste Baugruppe 31 den Betriebsmitteltank 3 umfasst. Im Betrieb des Arbeitsgeräts 1 entstehen Vibrationen, insbesondere durch das Werkzeug und/oder den Antriebsmotor 11. Um die Übertragung der an der ersten Baugruppe 31 erzeugten Vibrationen auf die zweite Baugruppe 32 gering zu halten, ist zwischen den Baugruppen 31 und 32 ein Schwingspalt 2 ausgebildet, der Relativbewegungen der ersten Baugruppe 31 gegenüber der zweiten Baugruppe 32 zulässt. Der Schwingspalt 32 ist von Antivibrationselementen 10 überbrückt. Im Ausführungsbeispiel sind drei Antivibrationselemente 10 dargestellt, deren Aufbau nachfolgend noch näher beschrieben wird. Zusätzlich können weitere und/oder anders aufgebaute Antivibrationselemente vorgesehen sein.

Im Ausführungsbeispiel ist der Antriebsmotor 11 ein Verbrennungsmotor. An der zweiten Baugruppe 32 ist ein Luftfilter 12 angeordnet, über den Verbrennungsluft für den Antriebsmotor 11 angesaugt wird. Der Luftfilter 12 ist über einen Ansaugkanal 13 mit dem Antriebsmotor 11 verbunden. Der Ansaugkanal 13 überbrückt im Ausführungsbeispiel den Schwingspalt 2. Auch eine andere Anordnung des Luftfilters 12 kann vorteilhaft sein.

Fig. 2 zeigt einen Teil der ersten Baugruppe 31 schematisch. Die erste Baugruppe 31 umfasst einen Motorträger 37, an dem der Antriebsmotor 11 gehalten ist. Es kann vorgesehen sein, dass Teile des Antriebsmotors 11, beispielsweise ein Kurbelgehäuse des Antriebsmotors 11, einteilig mit dem Motorträger 37 ausgebildet sind. An dem Motorträger 37 sind zwei Antivibrationselemente 10 gehalten. In Fig. 2 sind jeweils eine Schraubenfeder 15 sowie eine Befestigungsschraube 16 jedes Antivibrationselements 10 dargestellt. Wie Fig. 2 zeigt, besitzen die Befestigungsschrauben jeweils eine Eingriffskontur 17, im Ausführungsbeispiel eine Torx-Kontur zum Eingriff eines Werkzeugs.

Der Antriebsmotor 11 besitzt im Ausführungsbeispiel einen Zylinder 14, an dem ein drittes Antivibrationselement 10 gehalten ist. Auch von dem dritten Antivibrationselement 10 sind die Schraubenfeder 15 sowie die Befestigungsschraube 16 mit der Eingriffskontur 17 dargestellt. Die Antivibrationselemente 10 besitzen Längsmittelachsen 30, die der Mittelachse der Schraubenfedern 15 entsprechen. Wie Fig. 2 zeigt, verlaufen die Längsmittelachsen 30 im Ausführungsbeispiel parallel zueinander. Vorteilhaft beträgt der Winkel zwischen den Längsmittelachsen 30 der Antivibrationselemente 10 höchstens 5°.

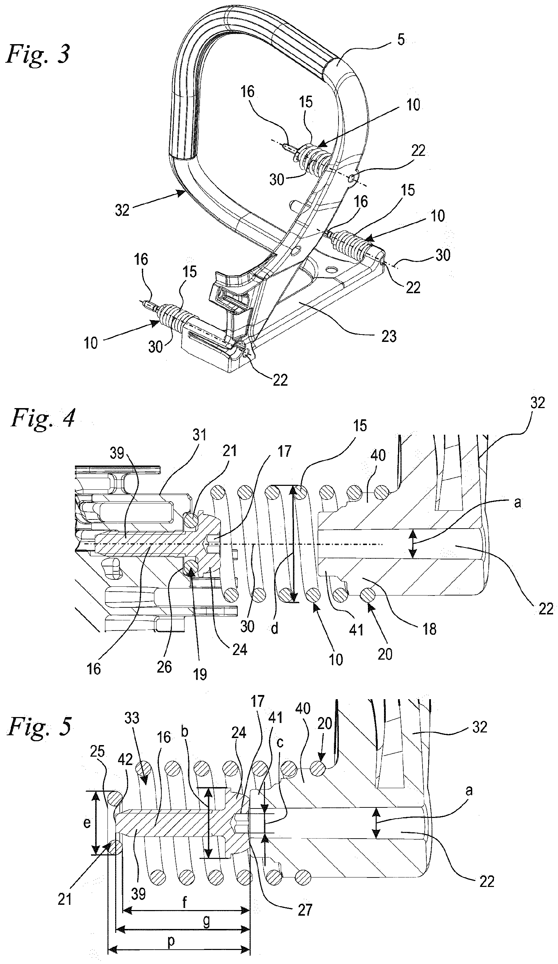

Fig. 3 zeigt die zweite Baugruppe 32 mit daran angeordneten Antivibrationselementen 10 in perspektivischer Darstellung. Die zweite Baugruppe 32 umfasst das Griffrohr 5 sowie einen Verbindungsabschnitt 23, der die beiden Enden des Griffrohrs 5 miteinander verbindet. Die in Fig. 3 nicht gezeigten Eingriffskonturen 17 (Fig. 2) der Befestigungsschrauben 16 sind durch Öffnungen 22 der zweiten Baugruppe 32 zugänglich. Im Ausführungsbeispiel ist das Griffrohr 5 mit dem Verbindungsabschnitt 23 einstückig ausgebildet. Vorteilhaft ist das Griffrohr 5 mit dem Verbindungsabschnitt 23 und den Stutzen 18 als ein Teil aus Kunststoff in einem Spitzgussverfahren hergestellt. Die Öffnungen 22 sind Öffnungen in dem einstückigen Gehäuseteil. Die zweite Baugruppe 32 umfasst vorteilhaft weitere Bauteile, insbesondere den in Fig. 1 gezeigten Handgriff 4.

Wie Fig. 4 zeigt, bildet ein erstes Ende 19 der Schraubenfeder 15 eine Befestigungsöse 21. Durch die Befestigungsöse 21 ragt die Befestigungsschraube 16 mit ihrem Schaft 39. Die Befestigungsschraube 16 besitzt einen Kopf 24, der die Befestigungsöse 21 an der ersten Baugruppe 31 in montiertem Zustand der Anordnung fixiert. Die Befestigungsöse 21 ist im Ausführungsbeispiel in einer Vertiefung 26 der ersten Baugruppe 31 angeordnet. Die Längsmittelachse der Befestigungsschraube 16 verläuft vom ersten Ende 19 bis zum zweiten Ende 20 der Schraubenfeder 15 vollständig innerhalb der Schraubenfeder 15. Im Ausführungsbeispiel fällt die Längsmittelachse der Befestigungsschraube 16 mit der Längsmittelachse 30 der Schraubenfeder 15 zusammen. Die Befestigungsschraube 16 und die Schraubenfeder 15 liegen koaxial zueinander. Die Längsmittelachse der Befestigungsschraube 16 verläuft durch die Öffnung 22. Die Eingriffskontur 17 ist im Kopf 24 der Befestigungsschraube 16 an der dem Stutzen 18 zugewandten Seite ausgebildet.

Wie Fig. 4 auch zeigt, ist an dem einstückigen Gehäuseteil jeweils ein Stutzen 18 für jedes Antivibrationselement 10 angeformt. Durch die Stutzen 18 ragt jeweils eine Öffnung 22. Die Öffnung 22 besitzt einen Innendurchmesser a, der kleiner als ein Außendurchmesser d der Schraubenfeder 15 ist. Ein zweites Ende 20 der Schraubenfeder 15 ist an dem Stutzen 18 angeschraubt. Im Ausführungsbeispiel ist das zweite Ende 20 am Außenumfang des Stutzens 18 angeschraubt. Es kann jedoch auch vorgesehen sein, dass der Stutzen 18 topfförmig ausgebildet ist und das zweite Ende 20 der Schraubenfeder 15 an einem Innenumfang des Stutzens 18 angeschraubt ist.

Wie Fig. 5 zeigt, besitzt der Kopf 24 der Befestigungsschraube 16 einen Außendurchmesser b. Der Außendurchmesser b ist deutlich größer als der Innendurchmesser a der Öffnung 22. Dadurch kann der Kopf 24 der Befestigungsschraube 16 nicht durch die Öffnung 22 hindurchtreten. Die Befestigungsschraube 16 lässt sich nicht durch die Öffnung 22 in die Schraubenfeder 15 einsetzen. Die Befestigungsschraube 16 ist demnach vor der Montage der Schraubenfeder 15 an dem Stutzen 18 in die Schraubenfeder 15 einzusetzen. Die Befestigungsschraube 16 kann dann lediglich durch die Öffnung 22 hindurch an der Eingriffskontur 17 betätigt und somit an der ersten Baugruppe 31 montiert werden, jedoch nicht aus dem Inneren 33 der Schraubenfeder 15 durch die Öffnung 22 herausfallen. Das Innere 33 der Schraubenfeder 15 ist dabei der Raum, der von den Federwindungen der Schraubenfeder 15 umschlossen ist.

Wie Fig. 5 auch zeigt, besitzt die Befestigungsöse 21 einen Außendurchmesser e. Der Außendurchmesser e ist kleiner als der Durchmesser d der Schraubenfeder 15 (Fig. 4). Im Ausführungsbeispiel ist der Außendurchmesser b des Kopfs 24 der Befestigungsschraube 16 nur geringfügig größer als der Außendurchmesser e der Befestigungsöse 21. Die Befestigungsöse 21 besitzt eine Auflagefläche 25, die eben ausgebildet ist. Die Auflagefläche 25 liegt in montiertem Zustand in der Vertiefung 26 an.

Wie Fig. 5 auch zeigt, besitzt die Befestigungsschraube 16 eine parallel zur Längsmittelachse 30 gemessene Länge g. Die Befestigungsöse 21 besitzt in dem gezeigten unbelasteten Zustand des Arbeitsgeräts 1 zu einer im Inneren der Schraubenfeder 15 angeordneten Stirnseite 27 des Stutzens 18 einen Abstand f. Im Ausführungsbeispiel ist die Länge g größer als der Abstand f. Der Abstand f ist dabei an der Stelle der Befestigungsöse 21 gemessen, an der der Kopf 24 der Befestigungsschraube 16 zur Anlage kommt. Der unbelastete Zustand des Arbeitsgeräts 1 ist ein Zustand, in dem an den Handgriffen und an der Sägekette 9 keine Kräfte auf das Arbeitsgerät 1 einwirken und den Schwingspalt 2 aufdehnen oder zusammendrücken.

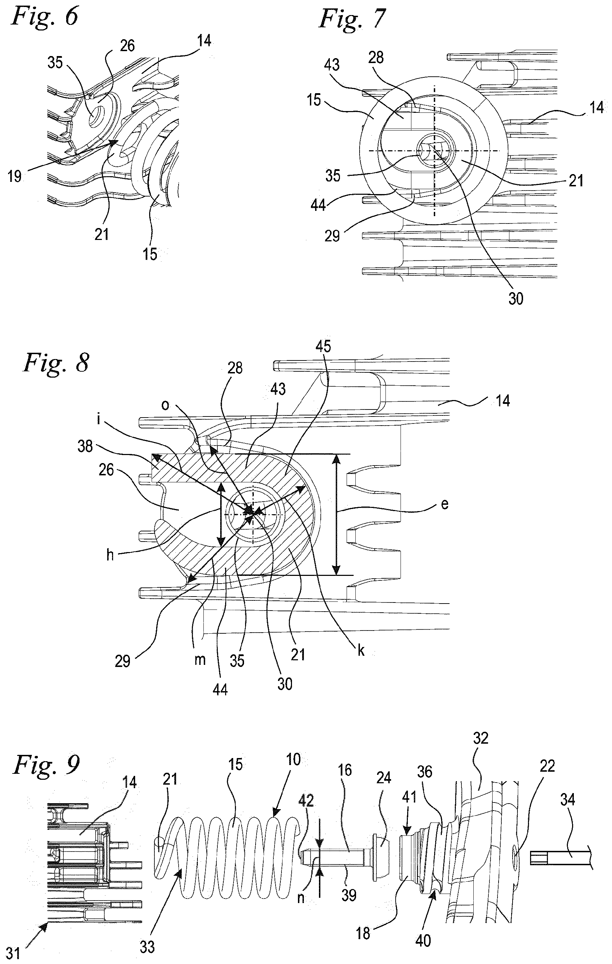

Dadurch, dass der Abstand f kleiner als die Länge g ist, ist das freie Ende 42 der Befestigungsschraube 16 bei der Montage in der Befestigungsöse 21 geführt und gehalten. Es ist verhindert, dass sich das Ende 42 der Befestigungsschraube 16 zwischen angrenzenden Windungen der Schraubenfeder 15 verhakt. Die Befestigungsöse 21 richtet das Ende 42 der Befestigungsschraube 16 zur Öffnung der Bohrung 35 (Fig. 6) der ersten Baugruppe 31 aus. Die Bohrung 35 ist dabei als Gewindebohrung ausgebildet, in die die Befestigungsschraube 16 in montiertem Zustand eingeschraubt ist. Dadurch, dass das Ende 42 der Befestigungsschraube 16 zur Bohrung 35 ausgerichtet ist, lässt sich die Befestigungsschraube 16 bei der Montage leichter an der ersten Baugruppe 31 einfädeln. Dadurch ist die Montage vereinfacht. Die Eingriffskontur 17 besitzt einen größten Durchmesser c, der kleiner als der Durchmesser a der Öffnung 22 ist. Dadurch kann ein Werkzeug zum Eingriff in die Eingriffskontur 17 gut durch die Öffnung 22 gesteckt werden.

Dadurch, dass stets ein Abschnitt der Befestigungsschraube 16 innerhalb der Befestigungsöse 21 angeordnet ist, wird die Schrägstellung der Befestigungsschraube 16 im Inneren 33 der Schraubenfeder 15 auf ein Maß begrenzt, bei dem ein Eingriff eines Werkzeugs 34 (Fig. 9) durch die Öffnung 22 in die Eingriffskontur 17 der Befestigungsschraube 16 möglich ist. Es kann zweckmäßig sein, den Durchmesser a der Öffnung 22 so groß auszubilden, dass das Werkzeug 34 (Fig. 9) in der Öffnung 22 schräg angeordnet werden kann. Dadurch kann die Zugänglichkeit der Eingriffskontur 17 einer begrenzt schräg stehenden Befestigungsschraube 16 verbessert werden. Der Durchmesser a der Öffnung 22 ist jedoch kleiner als der Außendurchmesser b des Kopfs 24 der Befestigungsschraube 16, so dass sich bevorzugt eine ringförmige Anlage des Kopfs 24 an der Stirnseite 27 des Stutzens 18 ergibt.

Die Auflagefläche 25 der Befestigungsöse 21 besitzt zur Stirnseite 27 des Stutzens 18 einen Abstand p. Der Abstand p ist größer als die Länge g der Befestigungsschraube 16. Dadurch liegt das freie Ende 42 der Befestigungsschraube 16 in der Befestigungsöse, wenn der Kopf 24 an der Stirnseite 27 des Stutzens 18 anliegt. Der Stutzen 18 besitzt einen Gewindeabschnitt 40 und einen Hülsenabschnitt 41 (siehe auch Fig. 4). Am Gewindeabschnitt 40 liegt die Schraubenfeder 15 mit ihren Windungen an. Die axiale Länge des Gewindeabschnitts 40 ist auf die gewünschten Federungseigenschaften angepasst. Der Hülsenabschnitt 41 erstreckt sich zwischen dem Gewindeabschnitt 40 und der Stirnseite 27 des Stutzens 18 radial innerhalb der Windungen der Schraubenfeder 15. Die axiale Länge des Hülsenabschnitts ist derart gewählt, dass der Abstand p der Auflagefläche 25 zur Stirnseite 27 des Stutzens 18 größer und der Abstand f der Befestigungsöse 21 zur Stirnseite 27 kleiner als die Länge g der Befestigungsschraube 16 ist. Dadurch liegt das freie Ende 42 innerhalb der Befestigungsöse 21, wenn die Befestigungsschraube 16 maximal in die Schraubenfeder 15 eingezogen ist. Das Ende 42 der Befestigungsschraube 16 steht also nicht über das erste Ende 19 der Schraubenfeder 15 über, wenn die Befestigungsschraube 16 mit ihrem Kopf 24 an der Stirnseite 27 des Stutzens 18 anliegt. Dies ist insbesondere dann vorteilhaft, wenn die Montage der ersten Baugruppe 31 derart erfolgt, dass die Längsmittelachse 30 der Schraubenfeder 15 in Richtung der Schwerkraft ausgerichtet ist und die zweite Baugruppe 32 insbesondere unterhalb der ersten Baugruppe 31 angeordnet ist. Dann nehmen die Befestigungsschrauben 16 automatisch ihre maximal eingezogene Stellung ein und stehen nicht über und können sich bei der Anordnung der ersten Enden 19 der Schraubenfedern 15 nicht an der ersten Baugruppe 31 verhaken.

Durch die Vorpositionierung und Führung des Endes 42 der Befestigungsschraube 16 in der Befestigungsöse 21 sowie die an die Befestigungsöse 21 angepasste Kontur der Vertiefung 26 (Fig. 4) ist eine Fehlmontage des ersten Endes 19 der Schraubenfeder 15 an der ersten Baugruppe 31 weitgehend vermieden. Bei falscher Anordnung der Schraubenfeder 15 lässt sich diese nicht in die Vertiefung 26 einsetzen bzw. die durch die Schraubenfeder 15 vorpositionierte Befestigungsschraube 16 lässt sich nicht mit der Bohrung 35 in Überdeckung bringen. Die Befestigungsschraube 16 lässt sich insbesondere nur fügen, wenn sie eben auf der Befestigungsöse 21 aufliegt.

Dadurch, dass der Stutzen 18 zusätzlich zum Gewindeabschnitt 40 einen Hülsenabschnitt 41 aufweist, können die Längen des Hülsenabschnitts 41 und des Gewindeabschnitts 40 unabhängig voneinander angepasst an die Länge g der Befestigungsschraube 16 und an die gewünschte Kennlinie der Schraubenfeder 15 gewählt werden.

Fig. 6 zeigt das erste Ende 19 einer Schraubenfeder 15, das am Zylinder 14 festgelegt ist. Wie Fig. 6 zeigt, besitzt der Zylinder 14 die Vertiefung 26. In der Vertiefung 26 ist eine Gewindebohrung 35 angeordnet. In die Gewindebohrung 35 kann die Befestigungsschraube 16 zur Befestigung der Schraubenfeder 15 am Zylinder 14 eingeschraubt werden.

Wie Fig. 7 zeigt, besitzt die Vertiefung 26 Wände 28 und 29, die an gegenüberliegenden Schenkeln 43, 44 der Befestigungsöse 21 angeordnet sind. Die Befestigungsöse 21 stützt sich je nach Drehrichtung der Befestigungsschraube 16 mit ihrem einen Schenkel 43 oder ihrem anderen Schenkel 44 an der einen Wand 28 oder der anderen Wand 29 ab. Vorteilhaft weisen die Wände 28 und 29 einen leichten Winkelversatz zu den Schenkeln 43, 44 der Befestigungsöse 21 auf. Der Winkelversatz dient zum Ausgleich von Toleranzen in der Ausrichtung der Befestigungsöse 21. Der Winkelversatz, also der Winkel, den die Schenkel 43, 44 mit den Wänden 28, 29 einschließen, beträgt vorteilhaft an jeder Wand 28, 29 zwischen 5° und 15°. In der in Fig. 7 gezeigten Position besitzen die Schenkel 43 und 44 der Befestigungsöse 21 geringe Abstände zu beiden Wänden 28 und 29.

Wie Fig. 8 zeigt, verläuft die Befestigungsöse 21 nicht über ihre gesamte Länge kreisbogenförmig um die Längsmittelachse 30. Die Befestigungsöse 21 besitzt einen Bogenabschnitt 45, in dem sie um die Längsmittelachse 30 verläuft und die daran anschließenden Schenkel 43 und 44, die etwa tangential zur Längsmittelachse 30 verlaufen. Die Wände 28, 29 der Vertiefung 26 folgen der Kontur der Befestigungsöse 21 im Bereich des Bogenabschnitts 45 und weisen im Bereich der Schenkel 43, 44 einen Winkelversatz zu den Wänden 28, 29 auf.

In Richtung zu einem freien Ende 38 der Schraubenfeder 15 nimmt der Abstand des Windungsdrahts an der Befestigungsöse 21 zur Längsmittelachse 30 zu. Der Windungsdraht besitzt im Bogenabschnitt 45 der Befestigungsöse 21 einen kleinsten Abstand k zur Längsmittelachse 30. In Richtung auf das freie Ende 38 nimmt der Abstand bis auf einen größten Abstand i zu. Die Wand 29 besitzt zur Längsmittelachse 30 einen Abstand m, der größer als der kleinste Abstand k, aber deutlich kleiner als der Abstand i ist. Die Wand 28 besitzt einen Abstand o zur Längsmittelachse 30, der kleiner als die Hälfte des Durchmessers d der Schraubenfeder 15 ist. Dadurch kann sich die Befestigungsöse 21 nicht beliebig in der Vertiefung 26 drehen, sondern nur so weit, bis der Windungsdraht an die Wand 28 oder die Wand 29 anschlägt.

Die Befestigungsöse 21 besitzt einen kleinsten Innendurchmesser h. Der kleinste Innendurchmesser h ist größer als ein Außendurchmesser n eines Schafts 39 der Befestigungsschraube 16 (Fig. 9).

Fig. 9 zeigt schematisch die Einzelteile des Antivibrationselements 10, über das die erste Baugruppe 31 und die zweite Baugruppe 32 miteinander verbunden sind. Das Antivibrationselement 10 besitzt als Einzelteile lediglich die Schraubenfeder 15 und die Befestigungsschraube 16. Der Stutzen 18 des Antivibrationselements 10 ist einteilig an der zweiten Baugruppe 32 angeformt. Der Stutzen 18 besitzt im Gewindeabschnitt 40 an seinem Außenumfang eine Nut 36, die wendelförmig ausgebildet ist und in die die Schraubenfeder 15 eingeschraubt werden kann.

Zur Montage des Antivibrationselements 10 wird zunächst die Befestigungsschraube 16 im Inneren 33 der Schraubenfeder 15 angeordnet, und zwar so, dass der Schaft 39 durch die Befestigungsöse 21 ragt. Anschließend wird die Schraubenfeder 15 in die Nut 36 des Stutzens 18 eingeschraubt. Dadurch, dass sowohl der Innendurchmesser h der Befestigungsöse 21 als auch der Innendurchmesser a der Öffnung 22 kleiner als der Außendurchmesser b der Kopfs 24 der Befestigungsschraube 16 sind, ist die Befestigungsschraube 16 dadurch unverlierbar an der zweiten Baugruppe 32 gehalten. Da der Abstand f kleiner als die Länge g ist (s. Fig. 5), kann der Schaft 39 sich nicht aus der Befestigungsöse 21 lösen, so dass sich die Befestigungsschraube 16 in der korrekten Position für die Montage an der ersten Baugruppe 31, beispielsweise am Zylinder 14 oder am Motorträger 37, befindet. Da die Befestigungsschraube 16 und die Schraubenfeder 15 an der zweiten Baugruppe 32 gehalten sind, können weitere, von den Antivibrationselementen unabhängige Montageschritte durchgeführt werden.

In einem späteren Montageschritt werden die beiden Baugruppen 31 und 32 miteinander verbunden. Hierzu wird die Befestigungsöse 21 in der Vertiefung 26 des Zylinders 14 angeordnet, und die Befestigungsschraube 16 wird in die Bohrung 35 der ersten Baugruppe 31 eingeschraubt. Hierzu ist ein Werkzeug 34 vorgesehen, das in Fig. 9 schematisch dargestellt ist und das beispielsweise ein Schraubendreher sein kann. Das Werkzeug 34 ist so bemessen, dass es durch die Öffnung 22 in die Eingriffskontur 17 (Fig. 4) eingesteckt werden kann. Da die Schrägstellung der Befestigungsschraube 16 innerhalb der Schraubenfeder 15 durch die Befestigungsöse 21 limitiert wird, ist zumindest ein Teil der Eingriffskontur 17 stets mit der Öffnung 22 in Überdeckung und für ein Werkzeug 34 zugänglich.

Es ist insbesondere vorgesehen, dass mindestens zwei, vorteilhaft alle Antivibrationselemente 10 an derselben Baugruppe 31, 32, insbesondere dem selben Gehäuseteil vormontiert werden. Auf diese Weise kommen bei der Verbindung der beiden Baugruppen 31, 32 alle ersten Enden 19 der Schraubenfedern 15 "gleichzeitig" mit den zugehörigen Vertiefungen 26 der anderen Baugruppe 31 in Kontakt, so dass alle Befestigungsschrauben 16 in einem Arbeitsgang nacheinander oder gleichzeitig verschraubt werden können.

Da alle Öffnungen 22 zur gleichen Längsseite des Arbeitsgeräts 1 hin offen sind (Fig. 3), können die Befestigungsschrauben 16 aller Antivibrationselemente 10 von der gleichen Seite des Arbeitsgeräts 1 und in der gleichen Richtung an der ersten Baugruppe 31 montiert werden. Dadurch ist die Montage vereinfacht.

## Patentansprüche

1. Handgeführtes Arbeitsgerät umfassend eine erste Baugruppe (31), eine zweite Baugruppe (32) und mindestens ein Antivibrationselement (10), wobei das Antivibrationselement (10) eine Schraubenfeder (15) umfasst, wobei ein erstes Ende (19) der Schraubenfeder (15) eine Befestigungsöse (21) bildet, an dem die Schraubenfeder (15) einen verringerten Außendurchmesser (e) aufweist, wobei das erste Ende (19) der Schraubenfeder (15) mit einer Befestigungsschraube (16) an der ersten Baugruppe (31) fixiert ist, wobei sich die Befestigungsschraube (16) durch die Befestigungsöse (21) erstreckt und der Kopf (24) ins Innere der Schraubenfeder (15) ragt, und wobei ein zweites Ende (20) der Schraubenfeder (15) an einem Stutzen (18) der zweiten Baugruppe (32) angeschraubt ist, wobei der Kopf (24) der Befestigungsschraube (16) eine Eingriffskontur (17) aufweist, wobei die zweite Baugruppe (32) eine Öffnung (22) aufweist, die sich durch den Stutzen (18) erstreckt und durch die die Eingriffskontur (17) im Kopf (24) der Befestigungsschraube (16) für ein Werkzeug (34) zugänglich ist,
wobei der Innendurchmesser (a) der Öffnung (22) kleiner als der Außendurchmesser (b) des Kopfs (24) der Befestigungsschraube (16) ist, wobei der Stutzen (18) ins Innere (33) der Schraubenfeder (15) ragt, wobei der Stutzen (18) eine im Inneren (33) der Schraubenfeder (15) angeordnete Stirnseite (27) aufweist, und wobei der Abstand (f) zwischen der Befestigungsöse (21) und der Stirnseite (27) des Stutzens (18) in unbelastetem Zustand des Arbeitsgeräts (1) kleiner als die Länge (g) der Befestigungsschraube (16) ist,
**dadurch gekennzeichnet, dass** der Abstand (p) einer Auflagefläche (25) der Befestigungsöse (21), die zur Anlage an der ersten Baugruppe (31) vorgesehen ist, zur Stirnseite (27) des Stutzens (18) größer als die Länge (g) der Befestigungsschraube (16) ist.

2. Handgeführtes Arbeitsgerät nach Anspruch 1,
**dadurch gekennzeichnet, dass** die eine der beiden Baugruppen (31, 32) mindestens einen Handgriff (5) umfasst, und dass die andere der beiden Baugruppen (31, 32) einen Antriebsmotor (11) umfasst.

3. Handgeführtes Arbeitsgerät nach Anspruch 1 oder 2,
**dadurch gekennzeichnet, dass** der Stutzen (18) einstückig mit einem Gehäuseteil der zweiten Baugruppe (32) ausgebildet ist, wobei das Gehäuseteil insbesondere mindestens einen Handgriff (5) bildet.

4. Handgeführtes Arbeitsgerät nach einem der Ansprüche 1 bis 3,
**dadurch gekennzeichnet, dass** die erste Baugruppe (31) eine Verdrehsicherung aufweist, die die Befestigungsöse (21) gegen ein Verdrehen um die Längsmittelachse (30) der Schraubenfeder (15) sichert.

5. Handgeführtes Arbeitsgerät nach Anspruch 4,
**dadurch gekennzeichnet, dass** die Befestigungsöse (21) eine unrunde Außenkontur aufweist und die erste Baugruppe (31) die Befestigungsöse (21) an ihrer unrunden Außenkontur gegen Verdrehen um die Längsmittelachse (30) der Schraubenfeder (15) sichert.

6. Handgeführtes Arbeitsgerät nach einem der Ansprüche 1 bis 5,
**dadurch gekennzeichnet, dass** die Befestigungsöse (21) zumindest teilweise in einer Vertiefung (26) der ersten Baugruppe (31) angeordnet ist.

7. Handgeführtes Arbeitsgerät nach Anspruch 6,
**dadurch gekennzeichnet, dass** mindestens eine die Vertiefung (26) begrenzende Wand (28, 29) eine Verdrehsicherung für die Befestigungsöse (21) gegen Verdrehen um die Längsmittelachse (30) der Schraubenfeder (15) bildet.

8. Handgeführtes Arbeitsgerät nach einem der Ansprüche 1 bis 7,
**dadurch gekennzeichnet, dass** Auflagefläche (25) der Befestigungsöse (21) eben ausgebildet ist.

9. Handgeführtes Arbeitsgerät nach einem der Ansprüche 1 bis 8,
**dadurch gekennzeichnet, dass** der Innendurchmesser (h) der Befestigungsöse (21) kleiner als der Außendurchmesser (b) des Kopfs (24) der Befestigungsschraube (16) ist.

10. Handgeführtes Arbeitsgerät nach einem der Ansprüche 1 bis 9,
**dadurch gekennzeichnet, dass** die Längsmittelachse der Befestigungsschraube (16) zwischen dem ersten Ende (19) und dem zweiten Ende (20) der Schraubenfeder (15) im Inneren (33) der Schraubenfeder (15) verläuft.

11. Handgeführtes Arbeitsgerät nach einem der Ansprüche 1 bis 10,
**dadurch gekennzeichnet, dass** das Arbeitsgerät (1) mindestens zwei Antivibrationselemente (10) mit einer Schraubenfeder (15) aufweist, und dass alle Stutzen (18) dieser Antivibrationselemente (10), an denen jeweils ein zweites Ende (20) der Schraubenfedern (15) eingeschraubt ist, an der zweiten Baugruppe (32) angeordnet sind und alle Eingriffskonturen (17) der Befestigungsschrauben (16) von der gleichen Seite des Arbeitsgeräts (1) aus zugänglich sind.

12. Verfahren zur Montage eines Antivibrationselements (10) eines handgeführten Arbeitsgeräts (1) nach einem der Ansprüche 1 bis 11, wobei in einem ersten Schritt der Kopf (24) der Befestigungsschraube (16) in der Schraubenfeder (15) angeordnet wird, wobei in einem zweiten Schritt die Schraubenfeder (15) mit ihrem zweiten Ende (20) an dem Stutzen (18) angeschraubt wird, und wobei in einem dritten Schritt die Befestigungsschraube (16) in die erste Baugruppe (31) eingeschraubt wird.

## Claims

1. Handheld work apparatus comprising a first assembly (31), a second assembly (32) and at least one anti-vibration element (10), wherein the anti-vibration element (10) comprises a coil spring (15), wherein a first end (19) of the coil spring (15) forms a fastening eyelet (21), at which the coil spring (15) has a reduced outer diameter (e), wherein the first end (19) of the coil spring (15) is fixed to the first assembly (31) by a fastening screw (16), wherein the fastening screw (16) extends through the fastening eyelet (21) and the head (24) projects into the inside of the coil spring (15), and wherein a second end (20) of the coil spring (15) is screwed onto a connecting piece (18) of the second assembly (32), wherein the head (24) of the fastening screw (16) has an engagement contour (17), wherein the second assembly (32) has an opening (22), which extends through the connecting piece (18) and through which the engagement contour (17) in the head (24) of the fastening screw (16) is accessible for a tool (34), wherein the inner diameter (a) of the opening (22) is smaller than the outer diameter (b) of the head (24) of the fastening screw (16), wherein the connecting piece (18) projects into the interior (33) of the coil spring (15), wherein the connecting piece (18) has a front end (27) arranged in the interior (33) of the coil spring (15), and wherein the distance (f) between the fastening eyelet (21) and the front end (27) of the connecting piece (18) in the non-loaded state of the work apparatus (1) is less than the length (g) of the fastening screw (16), **characterized in that** the distance (p) of a support surface (25) of the fastening eyelet (21), which is intended to bear on the first assembly (31), from the front end (27) of the connecting piece (18) is greater than the length (g) of the fastening screw (16).

2. Handheld work apparatus according to Claim 1,
**characterized in that** one of the two assemblies (31, 32) comprises at least one handle (5), and **in that** the other of the two assemblies (31, 32) comprises a drive motor (11).

3. Handheld work apparatus according to Claim 1 or 2,
**characterized in that** the connecting piece (18) is formed in one piece with a housing part of the second assembly (32), wherein the housing part forms in particular at least one handle (5).

4. Handheld work apparatus according to one of Claims 1 to 3, **characterized in that** the first assembly (31) has an anti-rotation safeguard, which secures the fastening eyelet (21) against rotating about the longitudinal centre axis (30) of the coil spring (15).

5. Handheld work apparatus according to Claim 4,
**characterized in that** the fastening eyelet (21) has a non-round outer contour, and the first assembly (31) secures the fastening eyelet (21) at its non-round outer contour against rotating about the longitudinal centre axis (30) of the coil spring (15).

6. Handheld work apparatus according to one of Claims 1 to 5,
**characterized in that** the fastening eyelet (21) is arranged at least partially in a depression (26) of the first assembly (31).

7. Handheld work apparatus according to Claim 6,
**characterized in that** at least one wall (28, 29) that delimits the depression (26) forms an anti-rotation safeguard for the fastening eyelet (21) against rotating about the longitudinal centre axis (30) of the coil spring (15).

8. Handheld work apparatus according to one of Claims 1 to 7,
**characterized in that** the support surface (25) of the fastening eyelet (21) is flat.

9. Handheld work apparatus according to one of Claims 1 to 8,
**characterized in that** the inner diameter (h) of the fastening eyelet (21) is less than the outer diameter (b) of the head (24) of the fastening screw (16).

10. Handheld work apparatus according to one of Claims 1 to 9,
**characterized in that** the longitudinal centre axis of the fastening screw (16) extends between the first end (19) and the second end (20) of the coil spring (15) in the interior (33) of the coil spring (15).

11. Handheld work apparatus according to one of Claims 1 to 10,
**characterized in that** the work apparatus (1) has at least two anti-vibration elements (10) having a coil spring (15), and **in that** all the connecting pieces (18) of these anti-vibration elements (10), at which in each case a second end (20) of the coil springs (15) is screwed in, are arranged on the second assembly (32), and all the engagement contours (17) of the fastening screws (16) are accessible from the same side of the work apparatus (1).

12. Method for mounting an anti-vibration element (10) of a handheld work apparatus (1) according to one of Claims 1 to 11, wherein, in a first step, the head (24) of the fastening screw (16) is arranged in the coil spring (15), wherein, in a second step, the coil spring (15) is screwed with its second end (20) onto the connecting piece (18), and wherein, in a third step, the fastening screw (16) is screwed into the first assembly (31).

## Revendications

1. Appareil de travail tenu à la main comportant un premier ensemble (31), un deuxième ensemble (32) et au moins un élément anti-vibratoire (10), l'élément anti-vibratoire (10) comportant un ressort hélicoïdal (15), une première extrémité (19) du ressort hélicoïdal (15) formant un œillet de fixation (21) au niveau duquel le ressort hélicoïdal (15) présente un diamètre extérieur réduit (e), la première extrémité (19) du ressort hélicoïdal (15) étant fixée au premier ensemble (31) à l'aide d'une vis de fixation (16), la vis de fixation (16) s'étendant à travers l'œillet de fixation (21) et la tête (24) faisant saillie dans l'intérieur du ressort hélicoïdal (15), et une deuxième extrémité (20) du ressort hélicoïdal (15) étant vissée sur une tubulure (18) du deuxième ensemble (32), la tête (24) de la vis de fixation (16) comprenant un contour d'entrée en prise (17), le deuxième ensemble (32) comprenant une ouverture (22) qui s'étend à travers la tubulure (18) et à travers laquelle le contour d'entrée en prise (17) dans la tête (24) de la vis de fixation (16) est accessible à un outil (34), le diamètre intérieur (a) de l'ouverture (22) étant inférieur au diamètre extérieur (b) de la tête (24) de la vis de fixation (16), la tubulure (18) faisant saillie dans l'intérieur (33) du ressort hélicoïdal (15), la tubulure (18) comprenant un côté frontal (27) disposé dans l'intérieur (33) du ressort hélicoïdal (15), et la distance (f) entre l'œillet de fixation (21) et le côté frontal (27) de la tubulure (18) dans l'état non chargé de l'appareil de travail (1) étant inférieure à la longueur (g) de la vis de fixation (16),
**caractérisé en ce que** la distance (p) d'une surface d'appui (25) de l'œillet de fixation (21), laquelle est prévue pour l'appui contre le premier ensemble (31), par rapport au côté frontal (27) de la tubulure (18) est supérieure à la longueur (g) de la vis de fixation (16).

2. Appareil de travail tenu à la main selon la revendication 1,
**caractérisé en ce que** l'un des deux ensembles (31, 32) comporte au moins une poignée (5), et **en ce que** l'autre des deux ensembles (31, 32) comporte un moteur d'entraînement (11).

3. Appareil de travail tenu à la main selon la revendication 1 ou 2,
**caractérisé en ce que** la tubulure (18) est formée d'une seule pièce avec une partie de boîtier du deuxième ensemble (32), la partie de boîtier formant en particulier au moins une poignée (5).

4. Appareil de travail tenu à la main selon l'une des revendications 1 à 3,
**caractérisé en ce que** le premier ensemble (31) comprend une fixation anti-rotation qui bloque l'œillet de fixation (21) de manière à empêcher une rotation autour de l'axe médian longitudinal (30) du ressort hélicoïdal (15).

5. Appareil de travail tenu à la main selon la revendication 4,
**caractérisé en ce que** l'œillet de fixation (21) comprend un contour extérieur non rond et le premier ensemble (31) bloque l'œillet de fixation (21) au niveau de son contour extérieur non rond de manière à empêcher une rotation autour de l'axe médian longitudinal (30) du ressort hélicoïdal (15).

6. Appareil de travail tenu à la main selon l'une des revendications 1 à 5,
**caractérisé en ce que** l'œillet de fixation (21) est disposé au moins partiellement dans un évidement (26) du premier ensemble (31).

7. Appareil de travail tenu à la main selon la revendication 6,
**caractérisé en ce qu'**au moins une paroi (28, 29) délimitant l'évidement (26) forme une fixation anti-rotation pour l'œillet de fixation (21) de manière à empêcher une rotation autour de l'axe médian longitudinal (30) du ressort hélicoïdal (15).

8. Appareil de travail tenu à la main selon l'une des revendications 1 à 7,
**caractérisé en ce que** la surface d'appui (25) de l'œillet de fixation (21) est formée de manière plane.

9. Appareil de travail tenu à la main selon l'une des revendications 1 à 8,
**caractérisé en ce que** le diamètre intérieur (h) de l'œillet de fixation (21) est inférieur au diamètre extérieur (b) de la tête (24) de la vis de fixation (16).

10. Appareil de travail tenu à la main selon l'une des revendications 1 à 9,
**caractérisé en ce que** l'axe médian longitudinal de la vis de fixation (16) s'étend entre la première extrémité (19) et la deuxième extrémité (20) du ressort hélicoïdal (15) dans l'intérieur (33) du ressort hélicoïdal (15).

11. Appareil de travail tenu à la main selon l'une des revendications 1 à 10,
**caractérisé en ce que** l'appareil de travail (1) présente au moins deux éléments anti-vibratoires (10) dotés d'un ressort hélicoïdal (15), et **en ce que** toutes les tubulures (18) de ces éléments anti-vibratoires (10), sur lesquelles respectivement une deuxième extrémité (20) des ressorts hélicoïdaux (15) est vissée, sont disposées sur le deuxième ensemble (32) et tous les contours d'entrée en prise (17) des vis de fixation (16) sont accessibles depuis le même côté de l'appareil de travail (1).

12. Procédé de montage d'un élément anti-vibratoire (10) d'un appareil de travail tenu à la main (1) selon l'une des revendications 1 à 11, la tête (24) de la vis de fixation (16) étant disposée dans le ressort hélicoïdal (15) dans une première étape, le ressort hélicoïdal (15) étant vissé, par sa deuxième extrémité (20), sur la tubulure (18) dans une deuxième étape, et la vis de fixation (16) étant vissée dans le premier ensemble (31) dans une troisième étape.
